# EUROPÄISCHE PATENTSCHRIFT

(11) **EP 1 290 371 B1**
(45) Veröffentlichungstag und Bekanntmachung des Hinweises auf die Patenterteilung: **29.03.2006**
(21) Anmeldenummer: 01956476.4
(22) Anmeldetag: 15.06.2001
(51) Int. Cl.: F16L 47/00

(54) **ANBOHRARMATUR**
TAPPING STOP VALVE
ROBINET AUTO-PERCEUR

(30) Priorität: 16.06.2000 DE 10028933
(43) Veröffentlichungstag der Anmeldung: 12.03.2003
(73) Patentinhaber: Friatec Aktiengesellschaft, 68229 Mannheim (DE)
(72) Erfinder: SICHLER, Wolfgang, 68239 Mannheim (DE); FASTANZ, Matthias, 68199 Mannheim (DE); MAIER, Fabian, 67368 Westheim (DE); MÜLLER, Gerhard, 68229 Mannheim (DE)
(74) Vertreter: Schmitt, Meinrad
(86) Internationale Anmeldenummer: PCT/EP2001/006774
(87) Internationale Veröffentlichungsnummer: WO 2001/096778

(56) Entgegenhaltungen:
- EP-A- 0 845 630
- DE-U- 9 308 621

## Beschreibung

Die Erfindung bezieht sich auf eine Anbohrarmatur gemäß der im Oberbegriff des Patentanspruchs 1 angegebenen Merkmale.

Aus der DE 93 08 621 U ist eine derartige Anbohrarmatur mit einem aus Kunststoff bestehenden Gehäuse bekannt, in deren Stutzen ein Bohrer angeordnet ist, wobei anschließend an das Außengewinde des Bohrers in dessen Vorschubrichtung die Innenfläche des Stutzens zylindrisch ausgebildet ist. Beim Drehen des Bohrers in Vorschubrichtung wird in die zunächst zylindrische Innenfläche ein Innengewinde eingebracht. Um eine sichere Führung des Bohrers beim Eindringen des Gewindes und beim Anbohren zu gewährleisten und ein Verkanten oder Abweichen von der koaxialen Ausrichtung im Stutzen zu vermeiden, weist das Außengewinde des Bohrers eine nicht unerhebliche axiale Länge auf, wodurch ein recht großes Drehmoment für den axialen Vorschub des Bohrers bedingt ist. Um eine unzulässig hohe Erwärmung des Kunststoffes im eingebrachten Gewindebereich zu vermeiden, kann nur eine geringe Vorschubgeschwindigkeit des Bohrers vorgegeben werden, wodurch eine relativ lange Montagezeit bedingt ist. Das für den axialen Vorschub erforderliche Drehmoment muß, sobald der Bohrer mit seiner Schneidkante oder dergleichen die Rohraußenfläche erreicht hat, zusätzlich zum Anbohrdrehmoment aufgebracht werden.

Des Weiteren ist aus der EP-B-0 572 817 eine Anbohrarmatur bekannt, deren Gehäuse insbesondere durch Schweißen mit einem Rohr verbindbar ist. Das Gehäuse der Armatur und ebenso das Rohr bestehen bevorzugt aus einem schweißbaren Kunststoff, insbesondere aus Polyethylen, wobei das Gehäuse in einem Sattel eine Heizwicklung zum Elektroschweißen aufweist. Ferner enthält das Gehäuse einen Stutzen, in welchen eine Führungsbuchse aus Metall integriert und insbesondere eingespritzt ist, wobei die Führungsbuchse an der Außenfläche Rillen, Zapfen oder dergleichen zur Drehsicherung und zur axialen Sicherung im Kunststoff des Stutzens aufweist. Die Führungsbuchse weist ein Innengewinde.für einen Bohrer auf, dessen Außengewinde in das Innengewinde eingreift und welche nach der Herstellung der Verbindung der Armatur mit dem Rohr das Einbringen einer Bohrung in das Rohr ermöglicht. Des weiteren ist mit dem Stutzen ein Abzweigstutzen zum Anschluß einer Abzweigleitung verbunden. Diese Armatur ermöglicht das Anbohren des Rohres unter Druck, also ohne daß das durch das Rohr strömende Medium, wie insbesondere Wasser oder Gas, abgesperrt werden muß, wobei üblicherweise in Versorgungsnetzen für Wasser ein Druck bis zu 16 bar und in Versorgungsnetzen für Gas ein Druck 10 bar vorherrschen kann.

Ferner ist aus der US-A-4 258 742 eine Anbohrarmatur aus Kunststoff bekannt, welche keine Führungsbuchse für den Bohrer aufweist. Der Bohrer ist direkt in eine Innengewinde des Stutzens eingeschraubt. Das Innengewinde wird nach der Herstellung bzw. dem Spritzen des Kunststoffgehäuses in dessen Stutzen eingebracht und nachfolgend wird der Bohrer in das sich über die gesamte Stutzenlänge erstreckende Innengewinde eingeschraubt. Das Anbohren von Rohren unter Druck ist mit einer solchen Anbohrarmatur nicht ohne weiteres möglich, da insbesondere aufgrund von Fertigungstoleranzen nach dem Anbohren das unter Druck strömende Medium in unzulässiger Weise durch den Gewindebereich zwischen Bohrer und Stutzen nach außen gelangen kann. Bei Vorgabe zu enger Toleranzen muß mit erheblichen Drehmomenten zum Durchführen des Anbohrens gerechnet werden, wobei Beschädigungen der Anbohrarmatur oder gar des Rohres nicht ausgeschlossen werden können.

Hiervon ausgehend liegt der Erfindung die Aufgabe zugrunde, eine verbesserte Anbohrarmatur der eingangs genannten Art aufzuzeigen, um bei geringem konstruktiven Aufwand das Einbringen des Gewindes mit niedrigem Drehmoment durchführen zu können und eine hohe Funktionssicherheit zu erreichen. Ferner soll das Anbohren von unter Druck stehenden Rohren problemlos ermöglicht werden.

Die Lösung dieser Aufgabe erfolgt gemäß der im Patentanspruch 1 angegebenen Merkmale.

Die vorgeschlagene Anborarmatur ermöglicht bei einfachem und funktionsgerechtem Aufbau problemlos das Einbringen des Innengewindes in die Innenfläche des Stutzens und mit hoher Funktionssicherheit das Anbohren auch von unter Druck stehenden Rohren. Der Bohrer oder eine zur Führung des Bohrers vorgesehene Hülse weisen ein selbstschneidendes Außengewinde auf, welches währenddes Anbohrvorgangs direkt in die im übrigen zylindrische Innenfläche des Stutzens einschneidet und/oder einprägt. Die Gewindeflanken sind mit einem spitzen Winkel ausgeführt, um ein leichtes Eindringen in die innenfläche des Stutzens zu realisieren. Der hierbei verdrängte Kunststoff fließt in den Gewindegrund und führt dort zu einer Abdichtung. Die Eindringtiefe der Gewindeflanken in die Innenfläche des Stutzens ist derart vorgegeben, daß eine automatische Abdichtung gegen das unter dem Bohrer unter Druck anstehende Medium gewährleistet ist. An dem in Vorschubrichtung vorderen Ende des Gewindes ist der Außendurchmesser des Gewindes um einen vorgegebenen Betrag größer vorgegeben als am übrigen Gewinde. Mittels des vorderen Gewindeendes erfolgt somit eine stärkere Verdrängung des Kunststoffes, insbesondere des Polyethylens, als in dem weiteren wesentlich längeren Gewindebereich. Somit wird das Drehmoment zum Eindrehen des Gewindes in den Kunststoff erheblich reduziert, denn der lange Gewindebereich mit geringerem Durchmesser als der vordere Gewindebereich passiert leicht und problemlos das in den Kunststoff mittels des vorderen Gewindebereiches eingeschnittene und/oder vorgeprägte Gewinde in der Innenfläche des Stutzens. Im Vergleich mit Anbohrarmaturen, welche in der Innenfläche des Stutzens ein vorgefertigtes Gewinde enthalten, sind Fertigungstoleranzen praktisch ohne Bedeutung, und eine sichere Abdichtung zwischen dem Gewinde des Bohrers oder der Hülse und dem während des Eindrehens derselben in die Innenfläche des Stutzens erzeugten Gewindes ist gewährleistet. Beim Zurückdrehen des Bohrers oder der Hülse findet deren Außengewinde selbsttätig das zuvor geschaffene Gewinde in der Innenfläche des Stutzens, so daß der Bohrer oder die Hülse weiterhin sicher abgedichtet bis in die gewünschte Endposition wieder gelangen kann.

In einer besonderen Ausgestaltung werden der Bohrer oder die den Bohrer aufnehmende Hülse bei der Herstellung der Anbohrarmatur in den Stutzen unmittelbar integriert und insbesondere eingespritzt, wobei im übrigen aber die zum Einschneiden des genannten Gewindes vorgesehene Innenfläche des Stutzens zylindrisch ausgebildet ist. Die Innenfläche des Stutzens enthält somit eine eingeformte Gewindezone entsprechend dem Gewinde des Bohrers oder der Hülse. Beim Anbohren mittels des Bohrers oder beim Drehen der Hülse werden letztere aus der eingeformten Gewindezone des Stutzens, welcher auch als Dom bezeichnet wird, in die zylindrische Innenzone des Stutzens herausgedreht. In dieser Zone wird erfindungsgemäß das Bewegungsgewinde eingeprägt, wobei das verdrängte Kunststoffmaterial in die Gewindeflanken verdichtet und als Gewindegang ausgeformt wird. Beim Zurückdrehen des Bohrers oder der Hülse schneiden sich die Gewindeflanken wieder in das vorgeschnittene Gewindeprofil in der Innenfläche des Stutzens hinein und verdichten das Kunststoffmaterial in den Flanken. Hierdurch wird zuverlässig eine Abdichtung auch während der Zurückbewegung sichergestellt. Durch die erfindungsgemäße Gewindegeometrie wird eine Spanbildung verhindert, welche sich normalerweise bei einem metrischen ISO bzw. Feingewinde ergeben würde. Es sei ferner festgehalten, daß eine Spanbildung bei Anbohrarmaturen eine Spanbildung während und nach dem Anbohrvorgang bzw. dem Drehen der Hülse und eine damit verbundene Verschmutzung des Rohrleitungsnetzes nicht zulässig ist. In Vorschubrichtung vor dem ersten Gewindebereich mit dem vergrößerten Gewindedurchmesser ist in besonders zweckmäßiger Weise ein Einlaufbereich des Gewindes vorhanden, in welchem der Durchmesser des "Gewindezahnes" beginnend vom Durchmesser des Gewindekerns des Bohrers oder der Hülse vorteilhaft kontinuierlich zunimmt, bis der Außendurchmesser des ersten Bereiches erreicht ist. Es ist somit keine Schneidkante oder dergleichen vorhanden, welche zu einer nicht zulässigen, spanenden Abtragung von Kunststoff führen würde. Der Gewindeeinlaufbereich erstreckt sich über einen vorgegebenen Umfangswinkel, bevorzugt wenigstens 90°, zweckmäßig wenigstens 180 Winkelgrad. Zweckmäßig erstreckt sich der Gewindeeinlauf maximal bis zu einem Umfangswinkel von 360°. vorzugsweise bis zu 180°. Mittels des ersten Gewindebereiches wird in der zylindrischen Innenfläche des Stutzens oder Domes das Gewinde vorgeprägt und nach dem Eindrücken in den nachfolgenden Gewindegängen des zweiten Gewindebereiches verdichtet. Erfindungsgemäß wird der derart verdrängte Kunststoff in den Gewindeflanken verdichtet und als Gewindegang in der Innenfläche des Stutzens ausgeformt. So wird insgesamt eine wirtschaftliche Herstellung der Anbohrarmatur erreicht und die Abdichtungsfunktion nach dem Anbohrvorgang des Rohres während der Bewegung des Bohrers bzw. der Hülse unter dem Druck des im angebohrten Rohr vorhandenen Mediums gewährleistet.

Weiterbildungen und besondere Ausgestaltungen der Erfindung sind in den Unteransprüchen sowie der nachfolgenden Beschreibung angegeben.

Die Erfindung wird nachfolgend anhand der in der Zeichnung dargestellten besonderen Ausführungsformen näher erläutert, ohne daß insoweit eine Beschränkung erfolgt. Es zeigen:
- Fig. 1: einen Schnitt durch die Anbohrarmatur mit integriertem Bohrer,
- Fig. 2: einen Schnitt, durch den Bohrer gemäß Fig. 1,
- Fig. 3: einen Schnitt durch die Anbohrarmatur ähnlich Fig. 1, wobei der Bohrer in einer Position vor dem Anbohren eines Rohres dargestellt ist,
- Fig. 4: einen Schnitt durch eine weitere Ausführungsform der Anbohrarmatur mit einer Hülse, in welche der Bohrer mittels einer Gewindespindel axial bewegbar angeordnet ist,
- Fig. 5: die Anbohrarmatur gemäß Fig. 4, wobei die Hülse und der Bohrer in einer Position vor dem Anbohren eines Rohres dargestellt sind,
- Fig. 6: die Hülse und den Bohrer gemäß Fig. 4,
- Fig. 7: die Anbohrarmatur gemäß Fig. 4, wobei der Bohrer während des Anbohrens dargestellt ist,
- Fig. 8: eine weitere Ausführungsform der Anbohrarmatur mit einer dem Bohrer teleskopartig aufnehmbaren Hülse,
- Fig. 9, 10: einen Schnitt bzw. eine perspektivische Darstellung der Hülse und des Bohrers der Anbohrarmatur gemäß Fig. 8,
- Fig. 11: die Anbohrarmatur gemäß Fig. 8, wobei der Bohrer in der Position nach dem Anbohren eines Rohres dargestellt ist,
- Fig. 12: die Anböhrarmatur gemäß Fig. 7, wobei die Hülse und der Bohrer in der Position nach dem Anbohren und Zurückfahren dargestellt sind.

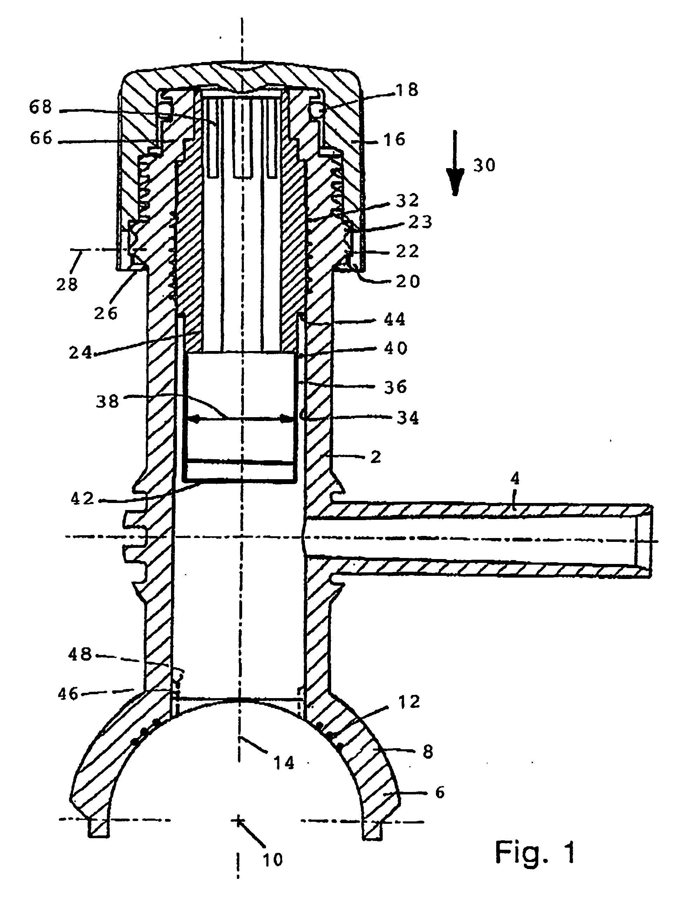

Fig. 1 zeigt einen Schnitt durch die Anbohrarmatur, deren aus Kunststoff bestehendes Gehäuse einen Stutzen 2 mit einem seitlichen Abzweistutzen 4 und einem Sattelstück 6 enthält. Das Sattelstück 6 weist eine halbzylindrische Innenfläche 8 koaxial zu einer Längsachse 10 auf und erstreckt sich orthogonal zur Zeichenebene. Im Bereich der Innenfläche 8 ist eine Schweißwicklung 12 koaxial zu einer Stutzenachse 14 angeordnet, wobei mittels der Schweißwicklung 12 in bekannter Weise eine dichte Verbindung mit einem hier nicht weiter dargestellten Rohr herstellbar ist, dessen Längsachse mit der Längsachse 10 übereinstimmt. Am oberen Ende des Stutzens, der auch als Dom bezeichnet wird, ist eine Kappe 16 vorgesehen, mittels welcher nach der Herstellung der Verbindung der Anbohrarmatur mit dem genannten Rohr und dessen Anbohren der Stutzen oder Dom 2 dicht verschlossen wird. Hierzu enthält der Stutzen 2 in einer Ringnut am oberen Ende einen Dichtring 18, welcher dichtend an der Innenfläche der Kappe 16 anliegt. Wie ersichtlich, ist die Kappe 16 über eine Gewindeverbindung mit dem Stutzenende verbunden, wobei in der dargestellten Position mittels ineinandergreifenden Rastelementen 20, 22 ein Lösen der Kappe unterbunden wird. Es ist der Zustand bzw. die Position der Kappe 16 nach dem Anbohren und nach dem Zurückfahren eines im Inneren des Stutzens 2 angeordneten Bohrers dargestellt. Die Anbohrarmatur wird werksseitig bereitgestellt und an einen Anwender in der Weise ausgeliefert, daß die Unterkante 26 der Kappe 16 die mit strichpunktierter Linie 28 angedeutete Position einnimmt, wobei das Kappen- Rastelement 20 mit einem weiteren Rastelement 23 des Stutzens in Eingriff steht. In dieser Position ist eine vorläufige Arretierung der Kappe gewährleistet, wobei aber nach Überwindung eines vorgegebenen Drehmoments die Rastverbindung ohne weiteres manuell gelöst und die Kappe 16 gemäß Zeichnung nach oben gedreht und von dem Stutzen 2 entfernt werden kann, so daß nunmehr der Bohrer 24 mittels eines entsprechenden Anbohrwerkzeuges gedreht und bezüglich der Stutzenachse 14 in Richtung des Pfeiles 30 axial zum Anbohren des Rohres bewegt werden kann.

Der Bohrer 24 ist werkseitig bei der Herstellung der Anbohrarmatur bzw. beim Spritzen des Gehäuses in den Stutzen 2 integriert. Der Bohrer 24 und ebenso die Schweißwicklung 12 werden in geeigneter Weise in das Spritzgußwerkzeug eingelegt und arretiert und nachfolgend wird das Gehäuse aus Kunststoff, insbesondere aus Polyethylen, in bekannter Weise gespritzt. Der Bohrer weist ein nachfolgend noch zu erläuterndes Spezialgewinde 32 auf, welches in den Kunststoff des Stutzens eingebettet ist und nach der Fertigung bis zum Anbohren die dargestellte Position des Bohrers am oberen Stutzenende sicherstellt. Im übrigen, also zum unteren Ende hin weist der Stutzen 2 eine zylindrische Innenfläche 34 auf. Unterhalb des Spezialgewindes 32 besitzt der Bohrer 24 einen zylindrischen Teil 36 mit einem reduzierten Außendurchmesser 38 derart, daß zur zylindrischen Innenfläche 34 ein Ringspalt 40 vorhanden ist. Das untere Ende 42 des Bohrers ist als Schneid- oder Bohrkante in bekannter Weise zum Anbohren des erwähnten Rohres ausgebildet. Zwischen dem zylindrischen Teil 36 und dem Gewinde 32 ist ein Anlaufbund 44 vorhanden, welcher beim Anbohren nach einer definierten Eintauchtiefe des Bohrers 24 auf dem Scheitel des mittels der Schweißwicklung 12 verbundenen Rohres aufliegt. Der Anlaufbund 44 verhindert ein weiteres Eintauchen des Bohrers 24 in das Rohr und ein Durchbohren der gegenüberliegenden Rohrwand. Infolge einer umlaufenden Hinterschneidung am Anlaufbund wird ein Stanzen des Anschlags in die Rohrwandung beim Weiterdrehen verhindert. Vielmehr wird der Kunststoff verdichtet und ein vom Monteur unmittelbar spürbarer Anschlag bzw. eine Drehmomenterhöhung festgestellt und ein Weiterdrehen verhindert.

Beim Zurückdrehen des Bohrers entgegen der mittels des Pfeiles 30 dargestellten Vorschubrichtung schneiden sich die Gewindeflanken des Gewindes 32 wieder in das nunmern in der Innenfläche 34 vorhandene vorgeschnittene Gewindeprofil hinein und verdichten das Kunststoffmaterial in den Flanken. Hierdurch wird eine Abdichtung während und nach der Bewegung des Bohrers nach oben sichergestellt und ein Ausströmen des im angebohrten Rohr unter Druck stehenden Mediums mit hoher Zuverlässigkeit verhindert. Es sei festgehalten, daß die Innenfläche 34 des Stutzens 2 über eine vorgegebene Länge zylindrisch ausgebildet ist, wobei die Länge mindestens so groß ist, wie der von der gezeigten oberen Ausgangsposition beim Vorschub des Bohrers 24 benötigte Weg zum vollständigen Einbringen der Durchgangsbohrung in die Wand des Rohres. Somit kann insbesondere am unteren Ende des Stutzens 2 im Bereich des Sattelstücks ein hier strichpunktiert angedeuteter Ansatz oder Ringbund 46 für den Anlaufbund 44 des Bohrers 24 vorhanden sein. Des weiteren kann im Rahmen der Erfindung der Ansatz 46 oben als Ventilsitz 48, insbesondere konisch, ausgebildet sein, wobei auch der anlaufbund 44 entsprechend konisch oder als Ventilfläche ausgebildet ist, um somit in der unteren Stellung des Bohrers eine zusätzliche Ventil- und Absperrfunktion zu erhalten.

Der Stutzen 2 weist am oberen Ende einen Bereich 66 auf, welcher einen kleineren Durchmesser als die Innenfläche 34 besitzt. Dieser nach innen verjüngte Bereich 66 bildet einen Anschlag für den Bohrer 32, welcher am oberen Ende gleichfalls einen reduzierten Durchmesser besitzt. Somit ist sichergestellt, daß auch im ungünstigsten Falle der Bohrer 24 nach dem Anbohren durch den im Rohr vorherrschenden Druck nicht nach oben aus dem Stutzen nach oben herausgedrückt werden kann. Zweckmäßig ist der Bereich 66 und entsprechend das obere Ende des Bohrers 24 zweifach gestuft und verjüngt ausgebildet. Des weiteren enthält der Bohrer 24 am oberen Ende innen als Mehrkant oder dergleichen ausgebildete Eingriffsbereiche oder Flächen 68 für ein korrespondierendes Anbohrwerkzeug, mittels welchem die Drehbewegung und der axiale Vorschub des Bohrers 24 eingeleitet wird.

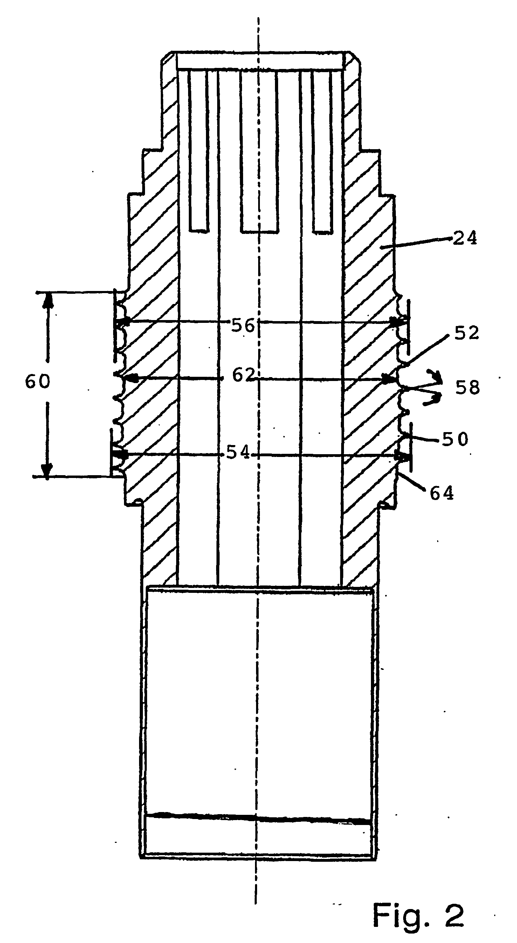

Fig. 2 zeigt einen axialen Schnitt durch den Bohrer 24, welcher bevorzugt aus Metall besteht. Das Gewinde weist in Vorschubrichtung gemäß Pfeil 30 einen ersten Gewindebereich 50 und entgegen der Vorschubrichtung einen anschließenden zweiten Gewindebereich 52 auf. Der erste Gewindebereich 50 besitzt einen Außendurchmesser 54 und der zweite Gewindebereich 52 einen Außendurchmesser 56. Die Gewindeflanken schließen einen spitzen Winkel 58 ein. Der erste Außendurchmesser 54 ist um einen vorgegebenen Betrag größer als der zweite Außendurchmesser 56. Die Durchmesserdifferenz der beiden Durchmesser 54 und 56 liegt bevorzugt im Bereich zwischen 0,3 bis 0,8 mm, insbesondere zwischen 0,4 bis 0,7 mm, und beträgt bevorzugt zumindest näherungsweise 0,5 mm. Hierdurch wird bei der Vorschubbewegung des Bohrers 24 in der zylindrischen Innenfläche 34 ein Gewinde vorgeprägt und nach dem Eindrücken in den nachfolgenden Gewindegängen verdichtet. Mittels des ersten Gewindebereiches 50 wird eine verstärkte Verdrängung des Kunststoffs der zylindrischen Innenfläche 34 erreicht, so daß der zweite Gewindebereich das derart vorgeprägte Gewinde in der Innenfläche 34 des Stutzens 2 passiert. Im Ergebnis wird durch die erfindungsgemäße Ausbildung des Gewindes des Bohrers das Drehmoment im Vergleich mit einem Bohrer, dessen Gewinde über die gesamte Länge den gleichen Durchmesser aufweist, erheblich reduziert. Gleichwohl ist aufgrund der vorgegebenen Gesamtlänge 60 des Gewindes eine sichere koaxiale Führung des Bohrers 24 im Stutzen 2 gewährleistet. Der erste Gewindebereich 50 umfaßt wenigstens einen sich über 360° um die Achse 14, welche mit der Stutzenachse übereinstimmt, sich erstreckenden Gewindegang. Vorteilhaft weist der erste Gewindebereich 50 zwei Gewindegänge auf, so daß das Gewinde im ersten Gewindebereich 50 einen sich über ein Umfangswinkel von zumindest näherungsweise 720° erstreckenden "Gewindezahn" besitzt. Die Anzahl der Gewindegänge im zweiten Gewindebereich mit reduziertem Außendurchmesser 56 ist wesentlich größer als die Anzahl des oder der Gewindegänge im ersten Gewindebereich 50, wobei in der dargestellten bevorzugten Ausführungsform im zweiten Gewindebereich 52 fünf Gewindegänge vorhanden sind. Der Gewindekern besitzt einen Durchmesser 62, welcher über die Gesamtlänge 60 bevorzugt im wesentlichen konstant ist. In Vorschubrichtung 30 vor dem ersten Gewindebereich 50 ist ein Gewindeeinlauf 64 vorhanden, in welchem der Außendurchmesser des dort vorhanden Gewindes beginnend vom Kerndurchmesser 52 bevorzugt kontinuierlich auf den Außendurchmesser 54 anwächst. Der Gewindeeinlauf 64 erstreckt sich bevorzugt mindestens über einen Umfangswinkel von 90 bis 180° und/oder maximal über einen Umfangswinkel von 360° bis 180°. Aufgrund des Gewindeeinlaufes weist somit das Gewinde keine Schneidkanten oder dergleichen auf, welche in nachteiliger Weise zu einer Spanbildung führen würden.

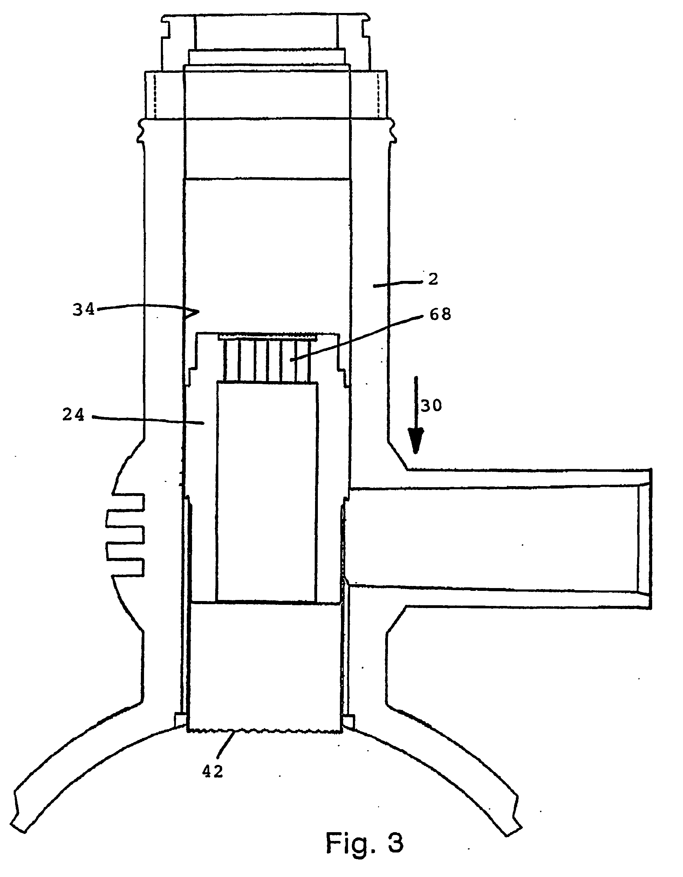

Fig. 3 zeigt schematisch einen axialen Schnitt durch die Anbohrarmatur, wobei der Bohrer 24 axial nach unten entsprechend obigen Ausführungen unter Bildung des Innengwindes der Innenfläche 34 des Stutzens 2 bewegt ist. Das vordere Ende 42 des Bohrers 24 befindet sich in der Position, in welcher das Anbohren des hier nicht dargestellten Rohres beginnt. Es sei angemerkt, daß die anhand von Fig. 1 erläuterte Kappe vom Stutzen 2 abgenommen ist, so daß das Anbohrwerkzeug mit dem Eingriffbereich 68 in Eingriff gebracht werden konnte.

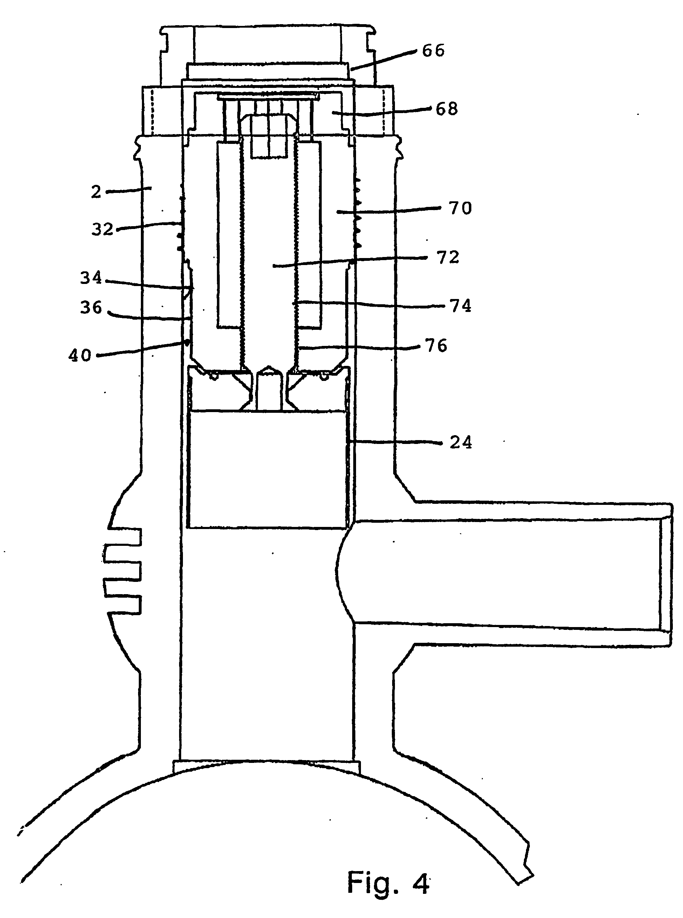

Fig. 4 zeigt eine besondere Ausführungsform, in welcher der Bohrer 24 mittelbar mittels einer Hülse 70 im Stutzen 2 angeordnet ist. Hierbei weist die Hülse 70 das Spezialaußengewinde 32 entsprechend den obigen Ausführungen auf. Mit dem Bohrer 24 ist eine Gewindespindel 72 drehfest gekoppelt, deren Außengewinde 74 als Feingewinde ausgebildet ist und in ein korrespondierendes Innengewinde 76 der Hülse 70 eingreift. Die Hülse 70 besitzt am oberen Ende wiederum innenliegend einen Eingriffsbereich 68 für ein Eindrehwerkzeug. Des weiteren ist am oberen Ende des Stutzens 2 der im Durchmesser reduzierte Anschlagbereich 66 vorgesehen und entsprechend ist auch das obere Ende der Hülse 70 als Sicherheitsanschlag ausgebildet. Ferner weist die Hülse 70, nach unten an das Spezialgewinde 32 anschließend, den zylindrischen Bereich 36 auf, wobei zwischen diesem ebenso wie zwischen dem Bohrer 24 und der zylindrischen Zone der Innenfläche 34 des Stutzens 2 der Ringspalt 40 vorhanden ist. Bei der Herstellung der Anbohrarmatur wird die Hülse 70 in das Spritzgußwerkzeug eingelegt und nachfolgend in den Kunststoff des Stutzens bzw. des Armaturengehäuses eingespritzt. Hierbei befindet Sich die Hülse im Vergleich mit der in Fig. 4 dargestellten Position weiter oben, so daß entsprechend der gestuften Ausbildung des Hülsenendes der gestufte Anschlagbereich 66 hergestellt wird. Nachfolgend wird der Bohrer 24 mit der Gewindespindel 72 in das Innengewinde 76 der Hülse 70 eingeschraubt.

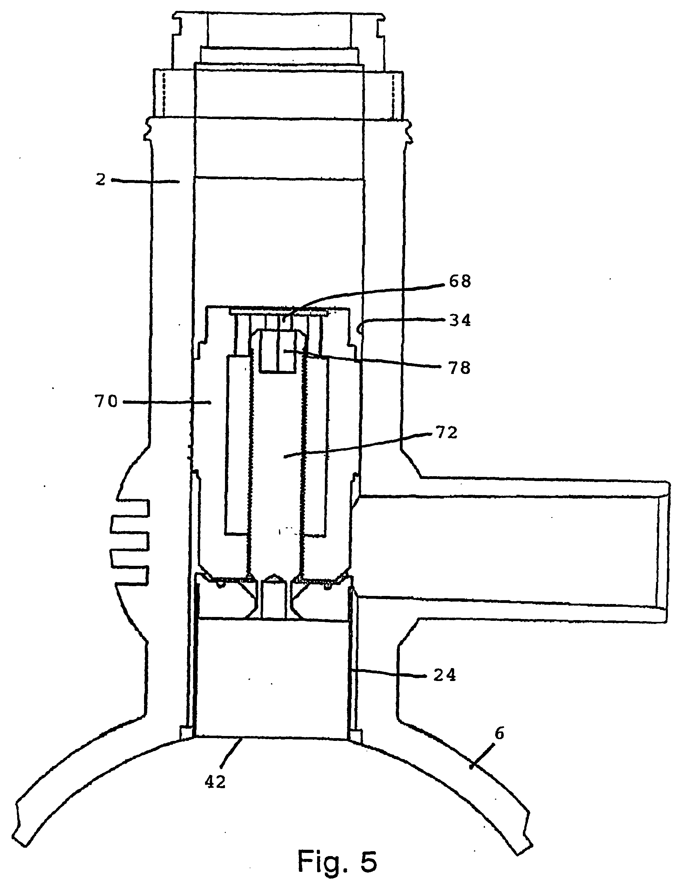

Fig. 5 zeigt einen Schnitt durch die Anbohrarmatur, wobei nunmehr die Hülse 70 samt Bohrer 24 bei gleichzeitigem Einprägen des Innengwindes in die zuvor zylindrische Zone der Innenfläche 34 axial nach unten bewegt worden ist, bis das untere Ende 42 des Bohrers 24 auf der Außenfläche des mit dem Sattelstück 6 verschweißten Rohres aufsitzt. Zum nachfolgenden Anbohren des Rohres wird das mit dem Eingriffsbereich 68 zunächst verbundene Werkzeug entfernt und ein anderes Werkzeug mit dem Eingriffsbereich 78 im oberen Ende der Gewindespindel 72 in Eingriff gebracht. Zum Anbohren des Rohres wird die Gewindespindel 72 gedreht, wobei über das Außengewinde 74 und das Innengewinde 76 der axiale Vorschub des Bohrers 24 erfolgt, während die Hülse 70 die eingenommene und dargestellte Position beibehält. Während des eigentlichen Anbohrens wird somit das über die Gewindespindel 72 eingeleitete Drehmoment praktisch ausschließlich zum Anbohren umgesetzt, zumal die Gewindeverbindung zwischen der Hülse 70 und der Gewindespindel 72 praktisch mit einem minimalen Drehmomentanteil betätigt wird. Es sei festgehalten, daß zum eigentlichen Anbohren kein zusätzliches Drehmoment zum Einschneiden oder Einprägen eines Innengewindes in den Stutzen 2 erforderlich ist und somit insgesamt das Anbohren mit einem vergleichsweise geringen Drehmoment durchführbar ist.

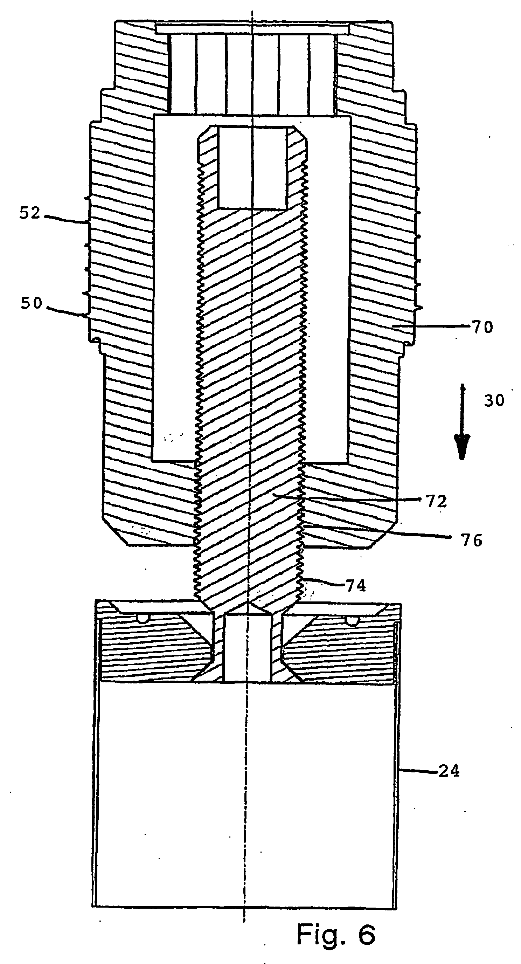

Fig. 6 zeigt vergrößert ohne das Armaturengehäuse die Baugruppe mit dem Bohrer 24, dessen drehfest verbundener Gewindespindel 72 und die Hülse 70. Das Außengewinde 74 der Gewindespindel 72 und ebenso das korrespondierende Innengewinde 76 der Hülse 70 sind als normale Feingewinde, insbesondere metrische ISO-Feingewinde, ausgebildet. Somit ist das eigentliche Anbohren des Rohres, wobei der Bohrer 24 bezüglich der Hülse 70 axial nach unten bewegt wird, mit einem geringen Kraft- bzw. Drehmomentbedarf durchführbar. Wie ersichtlich, besitzt die Hülse 70 entsprechend obigen Ausführungen in Vorschubrichtung 30 den ersten Gewindebereich 50, welcher im Vergleich zum gegen die Vorschubrichtung 30 anschließenden zweiten Gewindebereich 52 einen größenren Außendurchmesser besitzt.

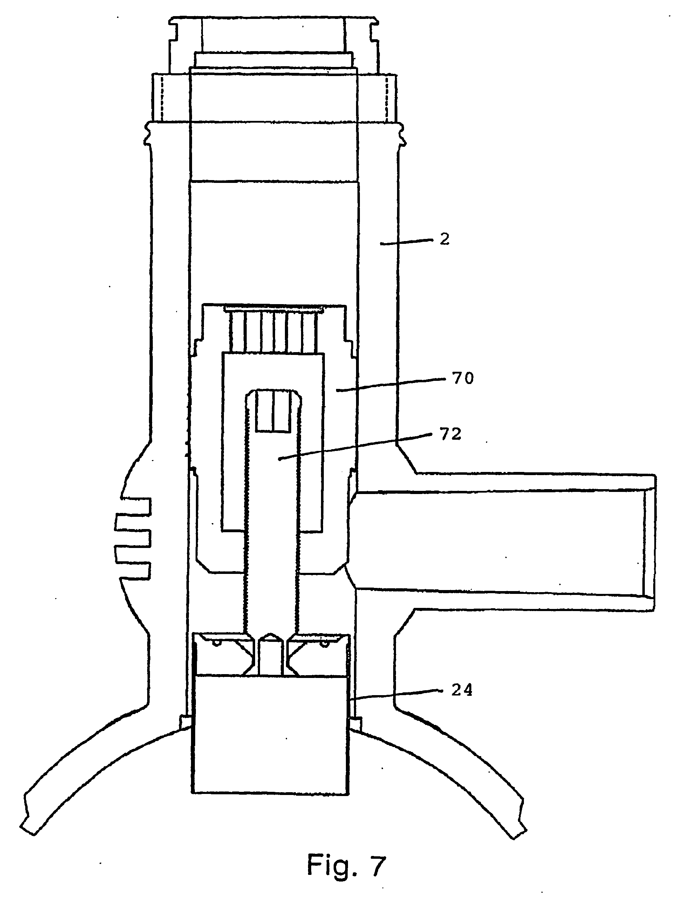

Fig. 7 zeigt die Anbohrarmatur in der Position des Bohrers 24 während des Anbohrens bzw. nach Abaschluß des Anbohrens des Rohres. Die Hülse 70 befindet sich in der gleichen axialen Position wie in Fig. 5 und der Bohrer 24 ist mittels der Gewindespindel 72 zur Hülse 70 in Vorschubrichtung 30 noch weiter nach unten bewegt.

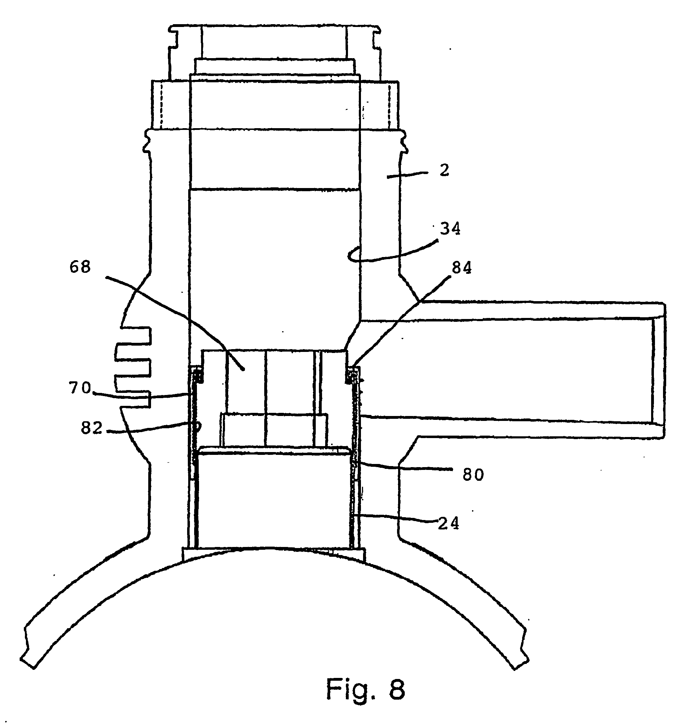

Fig. 8 zeigt eine besondere Ausgestaltung der erfindungsgemßen Anbohrarmatur mit einer Teleskop-Baugruppe, welche die Hülse 70 und den Bohrer 24 enthält. Durch das teleskopartige Ineinandergreifen des Bohrers 24 in die Hülse 70 ist die axiale Baulänge des Stutzens 2 erheblich verkürzt vorgegeben. Diese Teleskop-Baugruppe befindet sich am unteren Ende des die zylindrische Innenfläche 34 enthaltenden Stutzens 2. In dieser Position wurde die Anbohrarmatur mit der integrierten, bevorzugt dünnwandigen Hülse 70 gefertigt. Der Bohrer 24 besitzt einen Außendurchmesser, der näherungsweise gleich ist wie der Innendurchmesser der Hülse 70, wobei der Bohrer 24 einen Bereich mit einem Außengewinde 80 aufweist, der in ein korrespondierendes Innengewinde 82 der Hülse 70 eingreift. Die genannten Gewinde 80, 82 sind wiederum als Feingewinde ausgebildet. Der Bohrer 24 enthält am oberen Ende einen Eingriffsbereich 68 für ein Anbohrwerkzeug. Zum Anbohren des Rohres wird lediglich der Bohrer 24 axial nach unten gedreht, wobei aber die Hülse 70 die dargestellte untere Position beibehält.

Die Teleskop-Baugruppe wird bevorzugt bei der Herstellung in den Kunststoff des Gehäuses integriert bzw. eingespritzt. Alternativ kann im Rahmen der Erfindung die Teleskop-Baugruppe nach der Fertigung des Armaturengehäuses in die zylindrische Innenfläche des Stutzens bzw. Doms von unten her eingesetzt und eingeschraubt werden, wobei mit den beiden oben erläuterten Gewindebereichen das Innengewinde in den Kunststoff des Armaturengehäuses eingeprägt wird. Es sei an dieser Stelle ausdrücklich festgehalten, daß auch für die anderen Ausführungsformen zunächst allein das Kunststoffgehäuse gefertigt werden kann und nachfolgend der Bohrer oder die Hülse mit den erfindungsgemäßen Gewindebereichen in den Stutzen eingebracht werden können.

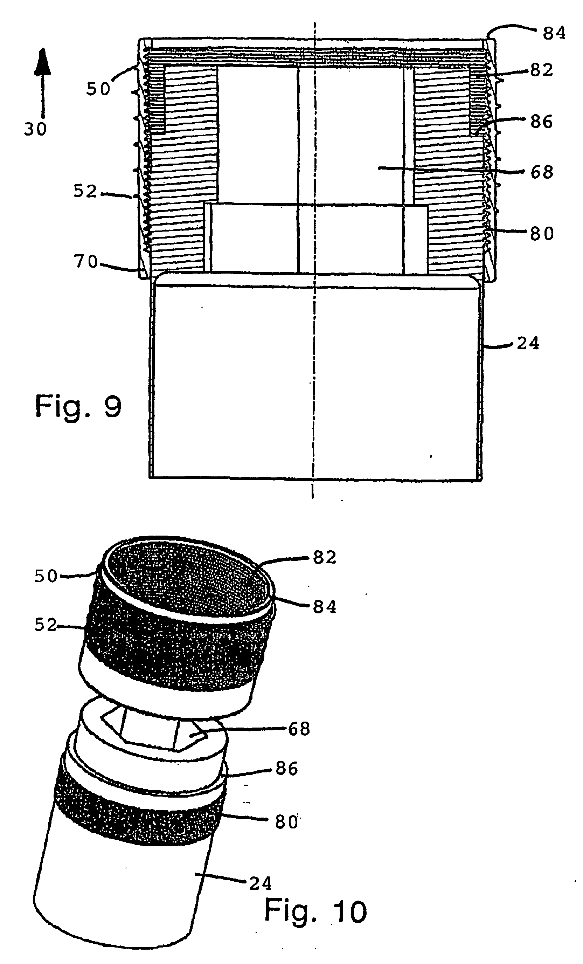

Fig. 9, 10 zeigen die Hülse 70 mit dem Bohrer 24, welcher hierbei die nach unten zum Bohren ausgefahrene Position einnimmt. Das Außengewinde 80 des Bohrers 24 und das korrespondierende Innengewinde 82 der dünnwandigen Hülse 70 sind hier gut zu erkennen. Am oberen Ende besitzt die Hülse 70 einen radial nach innen gerichteten Ringbund und/oder Anschlag 84, mittels welchem ein Herausdrehen des Bohrers 24 nach oben unterbunden wird. Hierzu korrespondierend weist der Bohrer 24 eine Ringschulter 86 auf, welche beim Drehen des Bohrers 24 nach oben in Richtung des Pfeiles 30 schließlich am Anschlag 84 der Hülse 70 zur Anlage gelangt. Es sei ausdrücklich festgehalten, daß bei dieser Ausführungsform die Vorschubrichtung gemäß Pfeil 30 nach oben zum oberen Stutzenende hin definiert ist. Der erste Gewindebereich 50 der Hülse 70 befindet sich somit an deren oberen Ende und der zweite Gewindebereich 52 mit geringerem Außendurchmesser schließt nach unten an.

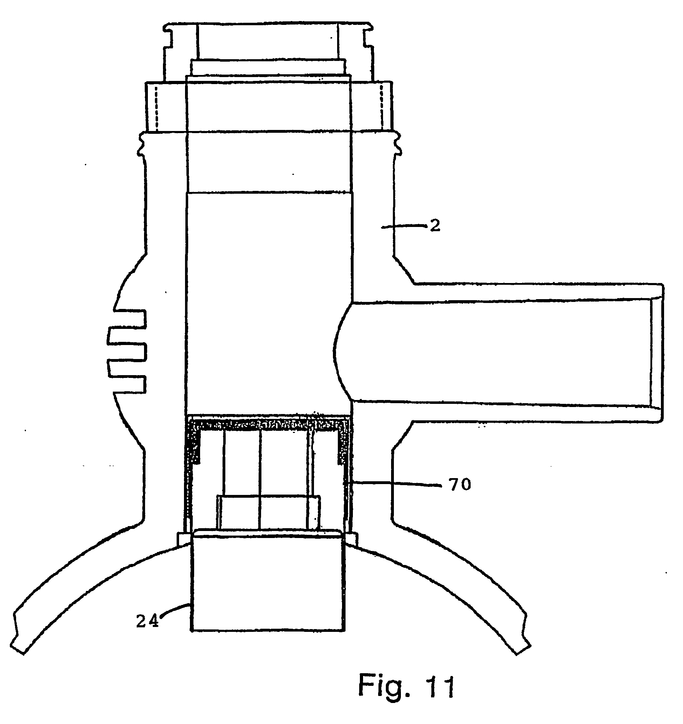

Fig. 11 zeigt die Anbohrarmatur, wobei die Hülse 70 die Position gemäß Fig. 8 unverändert beibehalten hat, während der Bohrer 24 zum Anbohren des Rohres axial mittels des Anbohrwerkzeugs nach unten gedreht worden ist. Es sei ausrücklich darauf hingewiesen, daß durch die Ausbildung des Innengewindes und des korrespondierenden Außengewindes, insbesondere als Feingewinde, das Drehen des Bohrers 24 bezüglich der Hülse 70 mit einem erheblich geringeren Drehmoment durchführbar ist, als das Drehen der Hülse 70 bezüglich des Kunststoffes des Stutzens 2. Somit behält die Hülse 70 beim Drehen des Bohrers nach unten die bei der Herstellung eingenommene Position ein.

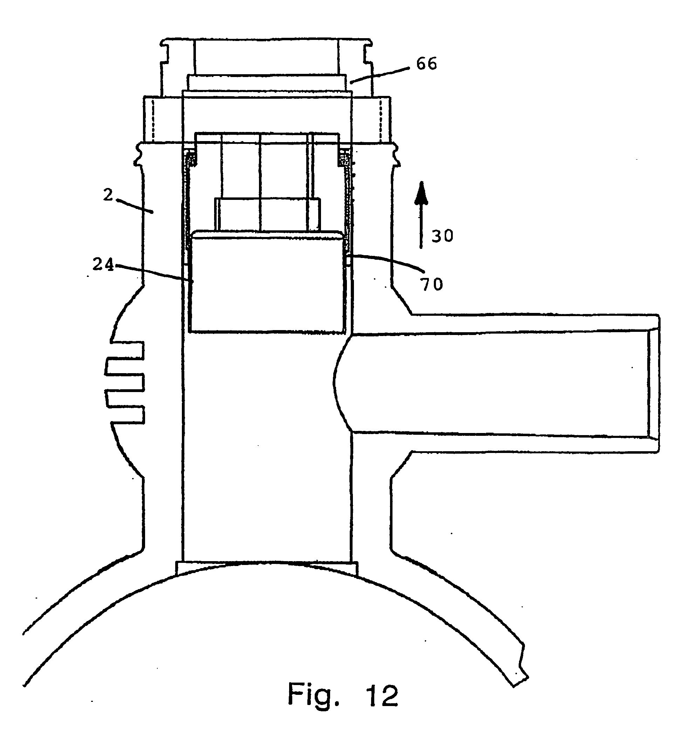

Fig. 12 zeigt die Anbohrarmatur, wobei die Teleskop-Baugruppe, welche den Bohrer 24 und die Hülse 70 enthält, in der Vorschubrichtung entsprechend Pfeil 30 nach oben bewegt worden ist. Hierzu wurde das Anbohrwerkzeug entgegen der Drehrichtung während des Anbohrens gedreht, wobei zunächst der Bohrer 24 mit der anhand von Fig. 9 und 10 erläuterten Ringschulter 86 an den Anschlag bzw. Ringbund 84 der Hülse 70 zur Anlage gelangte. Durch Weiterdrehen in der besagten Richtung wurde auch die Hülse 70 nach oben bewegt, wobei mittels des an der Außenfläche der Hülse angeordneten Gewindebereiche 50, 52 in die zuvor zylindrische Innenfläche des Stutzens 2 das Gewinde eingeprägt worden ist, wobei die diesbezüglichen Erläuterungen entsprechend Fig. 1 und 2 sinngemäß gelten. Aufgrund des innenliegenden Anschlagbereichs 66 am oberen Ende des Stutzens 2 wird der Vorschub beendet und ein vollständiges Herausdrehen sicher unterbunden.

### Bezugszeichen

- 2: Stutzen / Dom
- 4: Abzweigstutzen
- 6: Sattelstück
- 8: Innenfläche von 6
- 10: Längsachse
- 12: Schweißwicklung
- 14: Stutzenachse
- 16: Kappe
- 18: Dichtring
- 20: Rastelement von 16
- 22, 23: Rastelement von 2
- 24: Bohrer
- 26: Unterkante von 16
- 28: strichpunktierte Linie
- 30: Pfeil / Vorschubrichtung
- 32: Außengewinde / Spezialgewinde von 24
- 34: zylindrische Innenfläche von 2
- 36: zylindrischer Teil von 24
- 38: reduzierter Außendurchmesser
- 40: Ringspalt
- 42: unteres Ende von 24
- 44: Anlaufbund
- 46: Ansatz / Ringbund
- 48: Ventilsitz
- 50: erster Gewindebereich
- 52: zweiter Gewindebereich
- 54: Außendurchmesser von 50
- 56: Außendurchmesser von 52
- 58: spitzer Winkel
- 60: Gesamtlänge
- 62: Kerndurchmesser
- 64: Gewindeeinlauf
- 66: Bereich / Anschlag
- 68: Eingriffbereich
- 70: Hülse
- 72: Gewindespindel
- 74: Außengewinde von 72
- 76: Innengewinde von 70
- 78: Eingriffbereich von 72
- 80: Außengewinde von 24
- 82: Innengewinde von 70
- 84: Anschlag / Ringbund
- 86: Ringschulter von 24

## Patentansprüche

1. Anbohrarmatur mit einem Gehäuse aus Kunststoff, welches einen Stutzen (2) mit einer Innenfläche (34) aufweist und im Stutzen einen Bohrer (24) mit einem in die Innenfläche eingreifenden Außengewinde (32) enthält, wobei das Gehäuse mit einem Rohr, insbesondere durch Elektroschweißen, Verbindar ist, wobei ferner durch Drehen des Bohrers (24) in einer axialen Vorschubrichtung (30) in die an das Außengewinde (32) des Bohrers (24) anschließende, zunächst zylindrisch ausgebildete innenfläche (34) mittels des Außengewindes (32) ein Innengewinde eingebracht werden kann und ferner das genannte Rohr angebohrt werden kann, **dadurch gekennzeichnet, daß** das Außengewinde (32) einen in Vorschubrichtung (30) ersten Gewindebereich (60) aufweist, an welchen entgegen der Vorschubrichtung (30) ein zweiter Gewindebereich (52) anschließt, wobei der erste Gewindebereich (50) einen um einen vorgegeben Betrag größeren Außendurchmesser (54) als der Außendurchmesser (56) des zweiten Gewindebereiches (52) derart aufweist, daß beim Drehen des Bohrers (24) in der Vorschubrichtung (30) mittels des ersten Gewindebereiches (60) in die genannte zylindrische Innenfläche des Stutzens (2) das innengewinde eingeschnitten und/oder eingeprägt wird, welches der zweite Gewindebereich (52) passiert, und dass mittels des zweiten Gewindebereichs (52), welcher eine wesentlich größere axiale Länge als der erste Gewindebereich (50) aufweist, eine sichere axiale Führung des Bohrers (24) vorgegeben wird, wobei mittels des ersten Gewindebereiches (50) eine stärkere Verdrängung des Kunststoffes als mit dem wesentlich längeren zweiten Gewindebereich (52) erfolgt.

2. Anbohrarmatur nach Anspruch 1. **dadurch gekennzeichnet, dass** eine Hülse (70) des Bohrers (24) das Außengewinde (32) mit den genannten ersten und zweiten Gewindebereichen (50, 52) trägt, wobei der Bohrer (24) in der Hülse (70) mittels einer Gewindeverbindung (74, 76; 80, 82) axial bewegbar angeordnet ist und wobei durch Drehen der Hülse (70) in der axialen Vorschubrichtung (30) in die zunächst zylindrisch ausgebildete Innenfläche (34) mittels des Außengewindes (32) das Innengewinde eingebracht wird und nachfolgend durch Drehen des Bohrers (24) das Rohr angebohrt wird.

3. Anbohrarmatur nach Anspruch 1 oder 2, **dadurch gekennzeichnet, dass** der Bohrer (24) oder die Hülse (70) beim Herstellen der Anbohrarmatur in den Kunststoff des Gehäuses im oberen Endbereich des Stutzens (2) eingespritzt werden.

4. Anbohrarmatur nach einem der Ansprüche 1 bis 3, wobei die Durchmesserdifferenz zwischen dem ersten Gewindebereich (50) und dem zweiten Gewindebereich (52) im Bereich zwischen 0,3 bis 0,8 mm liegt, insbesondere im Beeich zwischen 0,4 bis 0,7 mm, und bevorzugt näherungsweise 0,5 mm beträgt.

5. Anbohrarmatur nach einem der Ansprüche 1 bis 4, wobei der erste Gewindebereich (50) einen Gewindegang aufweist, welcher sich über einen vorgegebenen Umfangswinkel bezogen auf die Stutzenachse (14) erstreckt wobei der vorgegebene Umfangswinkel bevorzugt sich zumindest näherungsweise über 360° erstreckt oder wobei der Umfangswinkel zumindest näherungsweise 720° groß ist und der erste Gewindebereich (50) zumindest näherungsweise zwei Gewindegänge enthält.

6. Anbohrarmatur nach einem der Ansprüche 1 bis 5, wobei der zweite Gewindebereich (52) wenigstens vier Gewindegänge aufweist und der erste Gewindebereich (50) wenigstens einen Gewindegang aufweist.

7. Anbohrarmatur nach einem der Ansprüche 1 bis 6, wobei der Stutzen (2) am oberen Ende einen Anschlagbereich (66) aufweist, dessen Innendurchmesser kleiner ist als der Innendurchmesser der Innenfläche (34), und wobei der Bohrer (24) oder die Hülse (70) einen zugeordneten Anschlag enthalten.

8. Anbohrarmatur nach einem der Ansprüche 1 bis 7, wobei der Bohrer (24) oder die Hülse (70) einen insbesondere zylindrischen Teil (36) enthalten, welcher einen gegenüber dem Kerndurchmesser (62) des Gewindes (32) reduzierten Außendurchmesser (38) aufweist, wobei zwischen dem genannten Teil (36) und der zunächst gewindefreien zylindrischen Zone der Innenfläche (34) ein Ringspalt (40) vorhanden ist.

9. Anbohrarmatur nach einem der Ansprüche 2 bis 8, wobei die Hülse (70) ein Innengewinde (76) enthält, in welches ein korrespondierendes Außengewinde (74) einer mit dem Bohrer (24) drehfest verbundenen Gewindespindel (72) eingreift, wobei die genannten Gewinde (76, 74) bevorzugt als Feingewinde ausgebildet sind.

10. Anbohrarmatur nach einem der Ansprüche 2 bis 8, wobei die Hülse (70) ein Innengewinde (82) enthält, in welches ein korrespondierendes Außengewinde des Bohrers (24) eingreift, wobei die Hülse (70) und der Bohrer (24) als eine Teleskop-Baugruppe ausgebildet sind und der Bohrer (24) zumindest teilweise im Inneren der Hülse (70) angeordnet ist, und wobei die genannten Gewinde (82, 80) bevorzugt als Feingewinde ausgebildet sind.

11. Anbohrarmatur nach Anspruch 10, wobei die Hülse (70) bei der Herstellung der Anbohrarmatur zunächst am unteren Ende des Stutzens (2) angeordnet wird und die Hülse (70) zusammen mit dem Bohrer (24) nach dem Anbohren des Rohres zum oberen Ende des Stutzens (2) im Stutzen (2) bewegt wird.

## Claims

1. Tapping valve comprising a housing made of plastics material, which comprises a connecting piece (2) with an inner surface (34) and in the connecting piece contains a drill (24) with an external thread (32) that engages in the inner surface, the housing being connected to a pipe, in particular by arc welding, it being possible, moreover, by rotating the drill (24) in an axial forward movement direction (30), to introduce an internal thread into the initially cylindrical inner surface (34) adjoining the external thread (32) of the drill by means of the external thread (32), and it being possible, moreover, for said pipe to be tapped, **characterised in that** the external thread (32) has a first thread region (50) in the forward movement direction (30), which a second thread region (52) adjoins counter to the forward movement direction (30), the first thread region (50) having an external diameter (54) that is larger by a predetermined amount than the external diameter (56) of the second thread region (52) such that when the drill (24) is rotated in the forward movement direction (30) the internal thread is cut and/or impressed into said cylindrical inner surface of the connecting piece (2) by means of the first thread region (50), the internal thread passing the second thread region (52), and **in that** by means of the second thread region (52), which has a substantially longer axial length than the first thread region (50), reliable axial guidance of the drill is predetermined, there being greater displacement of the plastics material by means of the first thread region (50) than by the substantially longer second thread region (52).

2. Tapping valve according to claim 1, **characterised in that** a sleeve (70) of the drill (24) carries the external thread (32) with said first and second thread regions (50, 52), the drill (24) being axially movably arranged in the sleeve (70) by means of a threaded connection (74, 76; 80, 82) and by rotating the sleeve (70) in the axial forward movement direction (30) the internal thread is introduced into the initially cylindrical inner surface (34) by means of the external thread (32) and the pipe is subsequently tapped by rotating the drill (24).

3. Tapping valve according to either claim 1 or claim 2, **characterised in that**, during production of the tapping valve, the drill (24) or the sleeve (70) is injected into the plastics material of the housing in the upper end region of the connecting piece (2).

4. Tapping valve according to any one of claims 1 to 3, wherein the difference in diameter between the first thread region (50) and the second thread region (52) is in the range of 0.3 and 0.8 mm, in particular in the range of 0.4 to 0.7 mm, and is preferably approximately 0.5 mm.

5. Tapping valve according to any one of claims 1 to 4, wherein the first thread region (50) has a turn which extends over a predetermined circumferential angle relative to the connecting piece axis (14), the predetermined circumferential angle preferably extending over at least approximately 360 ° or the circumferential angle being at least 720 ° and the first thread region (50) containing at least approximately two turns.

6. Tapping valve according to any one of claims 1 to 5, wherein the second thread region (52) comprises at least four turns and the first thread region (50) comprises at least one turn.

7. Tapping valve according to any one of claims 1 to 6, wherein, at the upper end, the connecting piece (2) has an abutment region (66), of which the internal diameter is smaller than the internal diameter of the inner surface (34) and the drill (24) or the sleeve (70) contains an associated stop.

8. Tapping valve according to any one of claims 1 to 7, wherein the drill (24) or the sleeve (70) contains an, in particular, cylindrical part (36) which has an external diameter (38) that is reduced with respect to the root diameter (62) of the thread (32), there being an annular gap (40) between said part (36) and the initially thread-free cylindrical region of the inner surface (34).

9. Tapping valve according to any one of claims 2 to 8, wherein the sleeve (70) contains an internal thread (76) in which a corresponding external thread (74) of a threaded spindle (72) non-rotatably connected to the drill (24) engages, said thread (76, 74) preferably being configured as a fine-pitch thread.

10. Tapping valve according to any one of claims 2 to 8, wherein the sleeve (70) contains an internal thread (82) in which a corresponding external thread of the drill (24) engages, the sleeve (70) and the drill (24) being configured as a telescoping assembly and the drill (24) being at least partially arranged in the interior of the sleeve (70) and said threads (82, 80) preferably being configured as fine-pitch threads.

11. Tapping valve according to claim 10, wherein, during production of the tapping valve, the sleeve (70) is initially arranged at the lower end of the connecting piece (2) and the sleeve (70), together with the drill (24), is moved in the connecting piece (2) toward the upper end of the connecting piece (2) after tapping of the pipe.

## Revendications

1. Robinet autoperceur avec un corps en matière plastique, comportant un manchon (2) avec une surface interne (34) et dans le manchon un foret (24) avec un filetage (32) s'engageant dans la surface interne, le corps pouvant être relié à un tuyau, notamment par soudage à l'arc, un taraudage pouvant être ménagé ensuite au moyen du filetage (32) dans la surface interne (34) d'abord conçue sous forme cylindrique se raccordant au filetage (32) du foret, par rotation du foret (24) dans un sens d'avance axial (30) et le tuyau cité pouvant ensuite être percé, **caractérisé en ce que** le filetage (32) présente une première zone de filetage (50) dans le sens d'avance (30) à laquelle se raccorde à l'encontre du sens d'avance (30) une deuxième zone de filetage (52), la première zone de filetage (50) présentant un diamètre extérieur (54) supérieur d'une valeur prédéfinie au diamètre extérieur (56) de la deuxième zone de filetage (52), de façon à ce que lors de la rotation du foret (24) dans le sens d'avance (30) le taraudage soit entaillé et/ou estampé dans la surface intérieure cylindrique citée du manchon (2) au moyen de la première zone de filetage (50), puis passe la deuxième zone de filetage (52) et **en ce qu'**au moyen de la deuxième zone de filetage (52), qui présente une longueur axiale nettement supérieure à celle de la première zone de filetage (50) un guidage axial sûr du foret (24) est prédéfini, la matière plastique étant soumise à un refoulement plus fort au moyen de la première zone de filetage (50), qu'avec la deuxième zone de filetage (52) nettement plus longue.

2. Robinet autoperceur selon la revendication 1, **caractérisé en ce qu'**une douille (70) du foret (24) porte le filetage (32) avec la première et la deuxième zones de filetage citées (50, 52), le foret (24) étant disposé de façon mobile en direction axiale dans la douille (70) au moyen d'un assemblage par filetage (74, 76 ; 80, 82) et par rotation de la douille (70) dans le sens d'avance axial (30), dans la surface interne (34) d'abord conçue sous forme cylindrique, le taraudage étant ménagé au moyen du filetage 32 et le tuyau étant percé par rotation consécutive du foret (24).

3. Robinet autoperceur selon la revendication 1 ou 2, **caractérisé en ce qu'**on injecte le foret (24) ou la douille (70) dans la matière plastique du corps, dans la zone d'extrémité supérieure du manchon (2) lors de la fabrication du robinet autoperceur.

4. Robinet autoperceur selon d'une quelconque des revendications 1 à 3, la différence de diamètre entre la première zone de filetage (50) et la deuxième zone de filetage (52) se situant dans la fourchette comprise entre 0,3 et 0,8 mm, notamment dans la fourchette comprise entre 0,4 et 0,7 mm et de préférence approximativement à 0,5 mm.

5. Robinet autoperceur selon l'une quelconque des revendications 1 à 4, la première zone de filetage (50) présentant un pas de filet s'étendant sur un angle inscrit prédéfini par rapport à l'axe du manchon (14) l'angle inscrit prédéfini s'étendant de préférence au moins approximativement sur 360° ou l'angle inscrit étant au moins approximativement de 720° et la première zone de filetage (50) présentant au moins approximativement deux pas de filet.

6. Robinet autoperceur selon l'une quelconque des revendications 1 à 5, la deuxième zone de filetage (52) présentant au moins quatre pas de filet et la première zone de filetage (50) présentant au moins un pas de filet.

7. Robinet autoperceur selon l'une quelconque des revendications 1 à 6, le manchon (2) présentant sur l'extrémité supérieure une zone de butée (66), dont le diamètre intérieur est inférieur au diamètre intérieur de la surface interne (34) et le foret (24) ou la douille (70) comprenant une butée associée.

8. Robinet autoperceur selon l'une quelconque des revendications 1 à 7, le foret (24) ou la douille (70) comprenant une partie notamment cylindrique (36) présentant un diamètre extérieur réduit (38), par rapport au diamètre du noyau (62) du filetage (32), un interstice annulaire (40) étant présent entre la partie (36) citée et la zone cylindrique d'abord non taraudée de la surface interne (34).

9. Robinet autoperceur selon l'une quelconque des revendications 2 à 8, la douille (70) comprenant un taraudage (76) dans lequel s'engage un filetage correspondant (74) d'une tige filetée (72) reliée de façon solidaire en rotation avec le foret (24), les filets cités (76, 74) étant conçus de préférence sous la forme de filets à pas fin.

10. Robinet autoperceur selon l'une quelconque des revendications 2 à 8, la douille (70) comprenant un taraudage (82) dans lequel s'engage un filetage correspondant du foret (24), la douille (70) et le foret étant conçus sous la forme d'un ensemble télescopique et le foret (24) étant disposé au moins partiellement à l'intérieur de la douille (70) et les filets cités (82, 80) étant conçus de préférence sous la forme de filets à pas fins.

11. Robinet autoperceur selon la revendication 10, lors de la fabrication du robinet autoperceur, la douille (70) étant d'abord disposée sur l'extrémité inférieure du manchon (2) et la douille (70) étant déplacée avec le foret (24) vers l'extrémité supérieure du manchon (2), dans le manchon (2), après perçage du tuyau.
